# EUROPÄISCHE PATENTSCHRIFT

(11) **EP 2 551 221 B1**
(45) Veröffentlichungstag und Bekanntmachung des Hinweises auf die Patenterteilung: **20.11.2013**
(21) Anmeldenummer: 12177488.9
(22) Anmeldetag: 23.07.2012
(51) Int. Cl.: B65G 47/244

(54) **Vorrichtung zum Drehen flacher Gegenstände**
Device for rotating flat objects
Dispositif de rotation d'objets plats

(30) Priorität: 29.07.2011 DE 102011080102
(43) Veröffentlichungstag der Anmeldung: 30.01.2013
(73) Patentinhaber: Wilhelm Bahmüller Maschinenbau-Präzisionswerkzeuge GmbH, 73655 Plüderhausen (DE)
(72) Erfinder: Kietzmann, Uwe, 73547 Lorch (DE); Haag, Armin, 73660 Urbach (DE)
(74) Vertreter: Dreiss

(56) Entgegenhaltungen:
- EP-A1- 0 341 811
- WO-A1-81/03477
- DE-A1-102008 034 266
- DE-U1- 29 613 864
- JP-A- 2005 126 211
- US-A- 5 188 211
- US-A- 5 568 920
- US-B2- 6 935 484

## Beschreibung

Die vorliegende Erfindung betrifft eine Vorrichtung zum Drehen von flachen Gegenständen, insbesondere von Kartonzuschnitten, mit einer Transportstrecke, über welche bzw. entlang welcher die Gegenstände in einer Transportrichtung T flach liegend mittels Rollen und/oder Bändern transportiert werden, mit einer Dreheinrichtung, welche angepasst ist, die Gegenstände während des fortlaufenden Transports zu drehen, wobei die Dreheinrichtung einen mechanischen Pin aufweist, welcher in eine Querrichtung im Verhältnis zur Transportrichtung von der Innenseite nach außen von der Transportstrecke derart bewegbar ist, dass der Gegenstand abgebremst gedreht wird.

Bei der Herstellung derartiger Kartonzuschnitte werden diese über mehrere Bearbeitungsstationen entlang einer Transportstrecke mittels Transporteinrichtungen, wie zum Beispiel Riemen, Rollen oder ähnlichem, transportiert. Um die Kartonzuschnitte oder andere flache Gegenstände aus einer Längsrichtung während des Transports entlang der Transportstrecke um 90° in eine Querrichtung zu drehen, werden sogenannte Drehvorrichtungen verwendet, auf welche sich die vorliegende Erfindung bezieht.

Zum Drehen solcher flachen Gegenstände wurden im Stand der Technik verschiedene Einrichtungen vorgeschlagen. Das Dokument US 5,188,211 offenbart eine Vorrichtung zum Drehen flacher Gegenstände gemaß dem Oberbegriff des Anspruchs 1. Beispielsweise gab es Einrichtungen zum Drehen derartiger Gegenstände, bei welchen die Kartonzuschnitte auf ein seitlich der Transportstrecke angeordnetes Hindernis treffen und durch das abrupte Abbremsen bzw. Halten der Kartonzuschnitte diese unmittelbar in Drehung versetzt wurden. Eine solche bekannte Drehvorrichtung ist beispielsweise in EP 1 345 827 B1 offenbart, wobei hier die seitlich fest angeordnete Halteeinrichtung, durch welche die Drehung initiiert wird, als ein aktivierbares Saugelement unter den Transportmitteln realisiert ist. Nachteilig bei derartigen bekannten Drehvorrichtungen ist, dass durch das abrupte Auftreffen der Zuschnitte auf die seitlich die Kartonzuschnitte festhaltende Einrichtung die Ecken der Kartonzuschnitte häufig beschädigt werden. Außerdem sind die bekannten Einrichtungen zum Drehen von flachen Gegenständen in der Regel nur für eine bestimmte Form und Größe von Kartonzuschnitten angepasst und erfordern aufwendige Umbauten der Anlage, falls eine andere Art oder eine andere Größe von Kartonzuschnitten innerhalb des Herstellungsvorgangs gedreht werden soll.

Demgegenüber ist es die Aufgabe der vorliegenden Erfindung, eine Vorrichtung zum Drehen von flachen Gegenständen vorzuschlagen, mittels welcher eine Beschädigung der Kanten der Gegenstände vermieden wird und eine größere Flexibilität in der Handhabung von verschiedenartigen und verschieden großen flachen Gegenständen gegeben ist.

Diese Aufgabe wird mit einer Vorrichtung mit den Merkmalen nach Anspruch 1 gelöst. Vorteilhafte Ausgestaltungen und Weiterbildungen der Erfindung sind Gegenstand der abhängigen Ansprüche.

Die Vorrichtung zum Drehen gemäß der Erfindung, wie sie in Anspruch 1 definiert ist, weist eine Transportstrecke auf, über welche bzw. entlang welcher die Gegenstände in einer Transportrichtung T flach liegend mittels Rollen und/oder Bändern transportiert werden, und eine Dreheinrichtung, welche angepasst ist, die Gegenstände während des fortlaufenden Transports zu drehen wobei die Dreheinrichtung einen mechanischen Pin aufweist, welcher in eine Querrichtung Q im Verhältnis zur Transportrichtung T von einer Innenseite nach außen von der Transportstrecke derart bewegbar ist, dass der Gegenstand abgebremst gedreht wird. Die flachen Gegenstände stoßen daher nicht mehr abrupt auf ein feststehendes Element der Dreheinrichtung, sondern der erfindungsgemäße mechanische Pin der Dreheinrichtung wird während des Transports der flachen Gegenstände derart seitlich bewegt, dass eine abgebremste Drehung der flachen Gegenstände erreicht wird. Das heißt, die seitliche Bewegung des mechanischen Pins der Dreheinrichtung erfolgt derart, dass ein abruptes Anstoßen einer Ecke der Kartonzuschnitte oder ähnliches vermieden wird und dass gleichzeitig der Drehimpuls auf die flachen Gegenstände übertragen wird, der dann letztendlich zu einer 90°-Drehung um eine vertikale Achse ohne eine Beschädigung der Ecken oder Kanten führt. Die Dreheinrichtung und der in Querrichtung bewegliche mechanische Pin sind nach der Erfindung derart ausgebildet, dass die seitliche Bewegung von einer Innenseite, d.h. einem Mittenbereich der Transportstrecke, nach außen steuerbar ist, so dass die abgebremste Drehung der Gegenstände bewirkt wird. Hierdurch können nicht nur die im Stand der Technik häufig gegebenen Beschädigungen der Gegenstände vermieden werden. Vielmehr kann damit auch eine flexible Anpassung an unterschiedlich große und unterschiedlich geformte Kartonzuschnitte erfolgen, so dass die Dreheinrichtung flexibler ist.

Erfindungsgemäß weist der Pin der Dreheinrichtung im Querschnitt eine im Wesentlichen runde Form mit einem segmentförmigen geraden Ausschnitt auf einer Seite auf und ist mit einer Saugeinrichtung zum Halten der Gegenstände an dem Pin während der abgebremsten Drehung versehen. Die Kartonzuschnitte oder flachen Gegenstände werden während der Drehung quasi durch die Saugeinrichtung an dem geraden Ausschnitt des Pins gehalten, so dass ein unbeabsichtigtes Verrutschen oder ein Fehlausrichten sicher vermieden wird. Der Pin kann so aktiv an der Aufbringung des Drehimpulses beteiligt werden, was die Steuerung der Drehung verbessert.

Nach einer vorteilhaften Ausgestaltung der Erfindung ist die Verstellbewegung des mechanischen Pins der Dreheinrichtung derart steuerbar, dass ein Zentrum des Gegenstands nach der Verdrehung in etwa in einer Mittelachse M der Transportstrecke bleibt. Dadurch wird vermieden, dass die flachen Gegenstände nach der Drehung erneut ausgerichtet werden müssen. Die gedrehten Kartonzuschnitte finden sich unmittelbar in der Mitte der Transportstrecke wieder und können so leicht in den nachfolgenden Stationen weiterverarbeitet und gehandhabt werden. Eine Steuerung der Verstellbewegung in Querrichtung des mechanischen Pins der Dreheinrichtung nach der Erfindung kann beispielsweise durch die Geschwindigkeit, die Anfangs- und Endposition des Pins, eine gezielte Verlangsamung der Verstellbewegung oder ähnliches erfolgen.

Nach einer weiteren vorteilhaften Ausgestaltung der Erfindung greift der Pin der Dreheinrichtung an einer Vorderseite des flachen Gegenstandes in Transportrichtung gesehen an. Der Drehimpuls wird also von der Vorderseite des Gegenstands aufgebracht. Nach einer diesbezüglichen alternativen Ausgestaltung der Erfindung greift der mechanische Pin der Dreheinrichtung nicht an der Vorderseite an, sondern in einem vorderen Bereich an einer Seitenkante des Gegenstands. Diese Alternative hat den Vorteil, dass auch bei schmalen Kartonzuschnitten, die nur eine relativ schmale Angriffsfläche an der Vorderseite bieten, ein zuverlässiges Drehen ohne Beschädigung erreicht wird. Auch hier wird gemäß der Erfindung gezielt eine abgebremste Drehung mit dem mechanischen Pin hervorgerufen, so dass jegliche Beschädigungen der Kanten am Seitenbereich verhindert werden, ebenso wie bei der alternativen Ausgestaltung, bei welcher an der Vorderseite die Drehung eingeleitet wird.

Nach einer weiteren vorteilhaften Ausgestaltung der Erfindung ist der mechanische Pin der Dreheinrichtung mit einem dämpfenden, elastischen Material ummantelt, oder er ist aus einem solchen den Aufprall dämpfenden, elastischen Material hergestellt. Hierdurch wird weiter die Gefahr einer Beschädigung reduziert, da die auf die Dreheinrichtung auftreffenden Kartonzuschnitte nicht auf ein hartes Element, sondern auf ein Element mit einer den Stoß dämpfenden Oberfläche treffen. Als Materialien kommen hierzu beispielsweise elastische Kunststoffe oder Gummimaterialien in Frage.

Nach einer weiteren vorteilhaften Ausgestaltung der Erfindung ist der mechanische und in Querrichtung bewegbare Pin der Dreheinrichtung um eine vertikale Achse X drehbar gelagert. Hierdurch kann der Pin quasi entlang der Seitenkante der Kartonzuschnitte entlangrollen, und es wird keine Reibung oder kein Druck durch die Bewegung des Pins auf die Seitenkante aufgebracht. Dies reduziert weiter die Gefahr von Beschädigungen. Nach einem diesbezüglichen alternativen Aspekt der Erfindung ist der Pin undrehbar montiert, d.h. er ist feststehend an der Dreheinrichtung angebracht. In diesem Fall wird der Drehimpuls auch auf die flachen Gegenstände verstärkt aufgebracht und nicht nur durch die Bewegung des Pins in Querrichtung.

Nach einer weiteren vorteilhaften Ausgestaltung der Erfindung ist der Pin zur Unterstützung der abgebremsten Drehung der flachen Gegenstände angetrieben. Der Pin, der bei dieser Variante vorzugsweise rund oder zumindest elliptisch geformt ist, wird um eine vertikale Rotationsachse mit einem geeigneten Mittel, wie zum Beispiel einem Elektromotor, in Drehung angetrieben, so dass die Einleitung der Drehbewegung noch verstärkt werden kann und die Steuerungsmöglichkeiten der abgebremsten Drehung noch vielseitiger sind. Der Antrieb des Pins ist vorzugsweise derart gesteuert, dass die auf der Transportstrecke vorbeilaufenden Kartonzuschnitte in ihrer Drehbewegung und nicht entgegen der Drehbewegung verstärkt werden.

Nach einer weiteren vorteilhaften Ausgestaltung der Erfindung weist der mechanische Pin der Dreheinrichtung im Querschnitt eine ellipsenförmige Form auf. Die ellipsenförmige Form des mechanischen Pins bewirkt, dass schon aufgrund der Form eine unterschiedliche Geschwindigkeit auf die Gegenstände im Ablauf der Verstellung in Querrichtung aufgebracht wird. Die Ellipsenform wirkt quasi als ein mechanisches Brems- oder Beschleunigungsmittel, das die Drehung von sich aus abbremst oder beschleunigt. Nach einer diesbezüglichen Alternative kann der mechanische Pin selbstverständlich auch eine kreisrunde Form im Querschnitt aufweisen.

Nach einer weiteren vorteilhaften Ausgestaltung der Erfindung weist der Pin der Dreheinrichtung einen auf die Dicke der flachen Gegenstände angepassten Aufnahmeschlitz an seinem Außenumfang auf. Der in horizontaler Richtung entsprechend der Transportstrecke angeordnete umlaufende Aufnahmeschlitz bietet für die ankommenden flachen Gegenstände eine Art zusätzliche Halterung, in welcher die Seitenkante oder die Vorderkante der Gegenstände von drei Seiten quasi umgriffen wird. Die Handhabung der Kartonzuschnitte zur Bewirkung der 90°-Drehung kann dadurch verbessert werden.

Nach einer weiteren vorteilhaften Ausgestaltung der Erfindung weist der mechanische Pin der Dreheinrichtung im Längsschnitt eine nach unten hin verjüngte kegelstumpfartige Form auf. Die Gegenstände werden hierdurch beim Auftreffen auf den Pin quasi leicht nach unten gedrückt. Durch diesen Impuls nach unten werden die Gegenstände während der Drehung sicher und flach auf der Transportstrecke und den Transportmitteln, wie den Bändern oder Rollen, gehalten.

Nach einer weiteren vorteilhaften Ausgestaltung der Erfindung ist unterhalb der Transportstrecke mindestens eine Vakuumeinrichtung vorgesehen. Die Vakuumeinrichtung oder Saugeinrichtung kann zur Unterstützung der Einleitung der Drehbewegung und zum Ausrichten der über sie hinweg transportierten Kartonzuschnitte verwendet werden. Nach einer diesbezüglichen vorteilhaften alternativen Ausgestaltung sind mindestens zwei parallele Vakuumeinrichtungen nebeneinanderliegend unterhalb der Transportstrecke vorgesehen. Durch·ein unterschiedliches Ansteuern beider Vakuumeinrichtungen kann die Drehbewegung verstärkt und unterstützt werden.

Nach einer weiteren vorteilhaften Ausgestaltung der Erfindung sind Ausrichtmittel für das Ausrichten der Gegenstände nach der Drehung vorgesehen. Falls nach der Drehung die Gegenstände nicht mehr in einer geraden oder gewünschten Ausrichtung entlang der Förderstrecke liegen, können sie so wieder in die richtige Ausrichtung zurückgebracht werden. Als Mittel zum Ausrichten der Gegenstände nach der Drehung können beispielsweise parallele Transportbänder vorgesehen sein, die unabhängig voneinander ansteuerbar sind. Nach einer diesbezüglichen Alternative oder Ergänzung können auch Ausrichtmittel in Form eines Hebeblechs vorhanden sein. Ein Hebeblech ist ein flaches blechartiges Element in der Ebene der Transportstrecke und seitlich von dem Transportweg. Die darüber beförderten flachen Gegenstände werden durch das Hebeblech bei Fehlausrichtung etwas angehoben, wodurch eine Art weitere Bremswirkung auf die Gegenstände seitlich bewirkt wird. Hierdurch werden die Gegenstände wieder in ihre richtige Ausrichtung und Lage gebracht.

Nach einer weiteren vorteilhaften Ausgestaltung der Erfindung ist in der Transportstrecke mindestens ein Transportband vorgesehen, das mit mindestens einer Vakuumeinrichtung ausgestattet ist, die zur Steuerung des Transports eine Saugwirkung auf die Gegenstände erzeugen kann. Die Bänder der Transportstrecke sind dadurch geeignet, nicht nur einen sicheren Transport zu gewährleisten, sondern auch durch unterschiedliches Abbremsen oder Halten durch die erzeugte Saugwirkung die beförderten Kartonzuschnitte in ihrer Lage und ihrer Bewegungsrichtung zu beeinflussen. Ebenso kann hierdurch die Drehung der Gegenstände gezielt unterstützt werden.

Nach einer weiteren vorteilhaften Ausgestaltung der Erfindung ist der Pin entgegen der Drehrichtung der zu verdrehenden Gegenstände während des Drehvorgangs angetrieben und ist ein von oben auf die Gegenstände wirkender, vorgespannter Niederhalter mindestens im Bereich vor dem Pin in Transportrichtung vorgesehen. Der Pin wird zur Unterstützung und Einleitung des Drehvorgangs nach diesem Ausführungsbeispiel aktiv angetrieben. Die Seitwärtsbewegung der ankommenden Kartonzuschnitte wird hierdurch schneller und sicherer ausgeführt. Dabei wird nach einem diesbezüglichen vorteilhaften Aspekt der Gegenstand bzw. die Kartonzuschnitte durch einen Niederhalter nach unten auf die Transportstrecke gedrückt. Zu diesem Zweck ist der Niederhalter mit einer definierten Vorspannung eingebaut. Der Niederhalter kann beispielsweise mit mechanischen Federn vorgespannt sein. Die relative Lage zwischen den zu verdrehenden Gegenständen und dem aktiv angetriebenen Pin der Dreheinrichtung ist somit sicher festgelegt. Als Niederhalter gemäß der vorliegenden Erfindung wird vorzugsweise ein solcher Niederhalter verwendet, der der Drehbewegung möglichst wenig Widerstand entgegensetzt.

Nach einer weiteren vorteilhaften diesbezüglichen Ausgestaltung der Erfindung ist als Niederhalter eine Reihe von frei rotierbaren Kugeln in einem Kugelkäfig vorgesehen. Die Kugeln sind derart über der Transportstrecke montiert, dass sie, je nach Dicke der Gegenstände, einen leichten Druck von oben ausüben. Durch das Vorsehen von Kugeln, die sich in dem Kugelkäfig frei drehen können, wird der durch den Pin eingeleitete Drehvorgang möglichst wenig gestört und dennoch eine sichere Lage der Kartonzuschnitte erreicht.

Nach einer weiteren vorteilhaften Ausgestaltung der Erfindung ist der Niederhalter in seiner Vorspannung und/oder seiner Höhe einstellbar ausgeführt. Mit unterschiedlichen Vorspannungen lassen sich unterschiedlich starke Haltekräfte auf die Gegenstände ausüben. Eine Höheneinstellung dient der Anpassung an unterschiedlich dicke Kartonzuschnitte oder ähnliches. Nach einem diesbezüglichen weiteren vorteilhaften Aspekt der Erfindung sind mindestens zwei Kugeln als Niederhalter vorgesehen, welche frei in einem Käfig drehen können und welche in ihrer Vorspannung unabhängig voneinander einstellbar sind. Auf diese Weise kann die vorderste Kugel, welche von dem Kartonzuschnitt als erstes erreicht wird, mit einer geringeren Vorspannung eingestellt werden als die nachfolgende(n) Kugel(n). Dies hat den Vorteil, dass auch druckempfindliche flache Gegenstände ohne eine Beschädigung mit der Vorrichtung nach der Erfindung sicher verdreht werden können.

Nach einer weiteren vorteilhaften Ausgestaltung der Erfindung ist im Bereich des Niederhalters, d.h. vorzugsweise direkt unterhalb des Niederhalters, mindestens eine angetriebene Walze der Transportstrecke vorgesehen, welche mindestens bereichweise eine reibungserhöhende Oberfläche aufweist. Die angetriebene Walze mit der in ihrer Reibung erhöhten Oberfläche wird mit der gleichen Geschwindigkeit wie die restlichen Elemente der Transportstrecke betrieben, und sie unterstützt die gleichmäßige Fortbewegung der Kartonzuschnitte trotz des Einwirkens des Pins der Dreheinrichtung, welcher den Drehvorgang einleitet und durchführt. Eine reibungserhöhende Oberfläche der Walze kann beispielsweise in Form einer Beschichtung mit einem Kunststoff- oder Gummimaterial oder mit einer aufgeklebten oder aufgespritzten Materialschicht am Außendurchmesser der Walze realisiert sein.

Nach einer weiteren vorteilhaften Ausgestaltung der Erfindung ist im Bereich nach der Dreheinrichtung - gesehen in der Transportrichtung T - ein von oben auf die Gegenstände wirkender, vorgespannter Niederhalter in Form einer Reihe von frei rotierbaren Kugeln vorgesehen. Der zweite Niederhalter hinter der Dreheinrichtung hat den Vorteil, dass die Kartonzuschnitte nach dem Drehvorgang gezielt abgebremst werden. Durch die Verdrehung um 90° haben die Gegenstände nach dem Verdrehen eine erhöhte Geschwindigkeit vor allem an der Außenseite, so dass mit dem nachgeschalteten Niederhalter in Form von rotierenden Kugeln die Kartonzuschnitte an diesen Bereichen gezielt abgebremst werden können.

Nach einer weiteren vorteilhaften Ausgestaltung der Erfindung weist der Pin der Dreheinrichtung an seiner Umfangsfläche bürstenartige Borsten auf. Die Kontaktfläche des Pins, welche die ankommenden Kartonzuschnitte erfasst, ist damit quasi gepolstert, und eine Beschädigung der Kanten der zu verdrehenden Gegenstände wird verhindert. Trotzdem erlauben die Borsten ein sicheres Ergreifen und seitliches Bewegen in der Drehrichtung, und die Borsten können auch in seitliche Öffnungen von Kartonzuschnitten eingreifen und damit das schnelle und sichere Verdrehen gewährleisten.

Weitere Vorteile und Merkmale der Erfindung werden im Folgenden durch die Beschreibung von vorteilhaften Ausgestaltungen der Erfindung offenbar werden. Die Erfindung wird im Folgenden mehr im Detail unter Bezugnahme auf die beigefügten Zeichnungen anhand einiger Ausführungsbeispiele beschrieben. In den Zeichnungen zeigen:
- Fig. 1: eine perspektivische Ansicht eines Ausführungsbeispiels einer Drehvorrichtung gemäß der Erfindung;
- Fig. 2: eine perspektivische Detailansicht der Drehvorrichtung gemäß dem Ausführungsbeispiel nach der Fig. 1 mit einem ellipsenförmigen Pin der Dreheinrichtung;
- Fig. 3: eine perspektivische Detailansicht eines Ausführungsbeispiels einer erfindungsgemäßen Drehvorrichtung mit einem kreisrunden Pin und Aufnahmeschlitz;
- Fig. 4a bis 4d: perspektivische Ansichten von alternativen Ausgestaltungsmöglichkeiten des Pins der Drehvorrichtung gemäß der Erfindung;
- Fig. 5: eine perspektivische Detailansicht eines Transportbands der Transportsrecke eines Ausführungsbeispiels der erfindungsgemäßen Drehvorrichtung;
- Fig. 6: eine perspektivische Detailansicht eines Transportbands und Hebeblechs der Transportstrecke eines Ausführungsbeispiels der erfindungsgemäßen Drehvorrichtung;
- Fig. 7: eine Draufsicht eines weiteren Ausführungsbeispiels einer erfindungsgemäßen Drehvorrichtung mit Kugelreihe als Niederhalter; und
- Fig. 8: eine perspektivische Detailansicht des Ausführungsbeispiels einer Drehvorrichtung nach der Fig. 7.

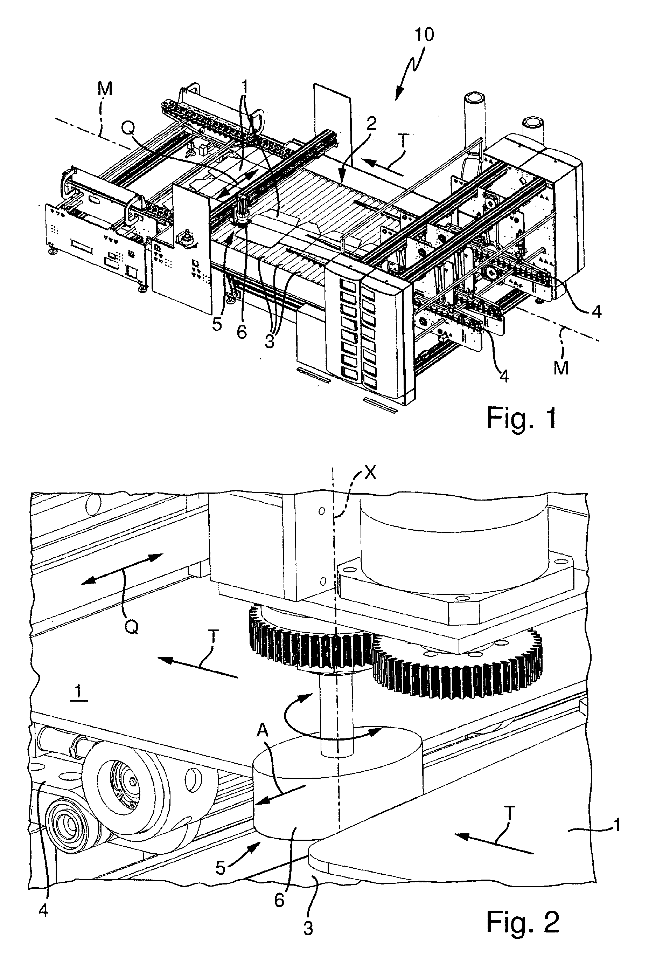

Die Fig. 1 und 2 zeigen in perspektivischen Ansichten ein erstes Ausführungsbeispiel einer erfindungsgemäßen Vorrichtung 10 zum Drehen von flachen Gegenständen wie beispielsweise Kartonzuschnitten 1. Die Kartonzuschnitte 1 werden entlang einer Transportstrecke 2 in Transportrichtung T, d.h. von rechts nach links in der Fig. 1, durch eine Mehrzahl von Transportmitteln, wie zum Beispiel Bänder 4 und Walzen oder Rollen 3, transportiert. Die Drehvorrichtung 10 ist als ein Bestandteil oder als ein Modul einer größeren Anlage zur Herstellung von Kartonzuschnitten ausgestaltet. Die Kartonzuschnitte werden in anderen Stationen einer solchen Anlage gestanzt, gefalzt, geklebt oder anderweitig bearbeitet. Die Drehvorrichtung 10 gemäß der Erfindung dient zu einem Drehen der auf der Transportstrecke 2 beförderten Kartonzuschnitte 1 um in etwa 90°. Dafür ist eine von oben eingreifende Dreheinrichtung 5 vorgesehen, mittels welcher die zunächst in Längsrichtung ausgerichteten Kartonzuschnitte 1 in eine Querausrichtung verdreht werden können (vgl. Kartonzuschnitt 1 vor der Drehvorrichtung 5 und Kartonzuschnitt 1 nach der Drehvorrichtung 5 in der Fig. 1).

Die Dreheinrichtung 5 ist bei diesem Ausführungsbeispiel an einer Art Brücke oder Querbalken über eine Laufkatze oder ähnliches oberhalb von der Transportstrecke 2 montiert, so dass die Dreheinrichtung 5 mitsamt dem der eigentlichen Drehung dienenden Pin 6 in Querrichtung Q im Verhältnis zur Transportrichtung T gezielt gesteuert verstellt werden kann. Die ankommenden Kartonzuschnitte 1 werden in der Regel entlang einer Mittelachse M der Transportstrecke 2 befördert, und der Pin 6 der Dreheinrichtung 5 wird auf solch eine Position bewegt, dass er bei diesem Ausführungsbeispiel an der Vorderkante des Kartonzuschnitts 1 angreift und einen Drehimpuls erzeugt, wie es die Situation der Fig. 1 verdeutlicht. Damit der Kartonzuschnitt 1 beim Auftreffen auf die Dreheinrichtung nicht beschädigt wird, wird dabei die Dreheinrichtung 5 mit dem Pin 6 gezielt gesteuert: Die Dreheinrichtung 5 wird während des Auftreffens des zu drehenden Kartonzuschnitts 1 von einer Innenseite nach außen von der Transportstrecke 2, d.h. in Querrichtung Q, bewegt. Dadurch wird eine Art abgebremster Drehimpuls auf den zu drehenden Kartonzuschnitt 1 übertragen. Durch diese gezielte Bewegung nach außen während des Anstoßens des Kartonzuschnitts 1 wird auch die Drehung um 90° unterstützt, so dass der Kartonzuschnitt in Transportrichtung T nach der Dreheinrichtung 5 unbeschädigt und sicher in der gewünschten verdrehten Lage (Querausrichtung) auf der Transportstrecke 2 zu liegen kommt und in dieser Lage weiter zu den nachfolgenden Stationen der Bearbeitung oder einer Stapeleinrichtung etc. befördert werden kann.

Bei dem in der Fig. 2 gezeigten Ausführungsbeispiel der Dreheinrichtung 5 ist der mechanische Pin 6 aus einer nach oben vorragenden Achse zur Montage und mit einem im Querschnitt ellipsenförmigen Pin 6 gebildet. Der Pin 6 ist bei diesem Ausführungsbeispiel noch zusätzlich um eine vertikale Achse X angetrieben über das in der Fig. 2 angedeutete Getriebe aus zwei Zahnrädern und einem Elektromotor oder ähnlichem. Durch die Ellipsenform des Pins 6 und durch das Antreiben des Pins 6 über eine gezielte Steuerung können Beschleunigungen und Abbremsungen bei der Aufbringung des Drehimpulses bewirkt werden. Die Drehung des Pins 6 um die Achse X kann beispielsweise derart angesteuert sein, dass eine sanfte Abbremsung beim Auftreffen des Kartonzuschnitts 1 erreicht wird und anschließend eine beschleunigte Drehung des Kartonzuschnitts 1 auf der Transportstrecke 2 verursacht wird. Im Bereich der Dreheinrichtung 6 ist bei diesem Ausführungsbeispiel eine Mehrzahl von Rollen 3 vorgesehen, im Anschluss besteht sodann die Transportstrecke 2 aus parallelen Bändern 4 (vgl. auch Fig. 1), die jeweils mit Vakuumeinrichtungen an der Unterseite der Transportstrecke 2 versehen sind, was weiter unten im Detail beschrieben werden wird. Der Pin 6 der Dreheinrichtung 5 kann sowohl als ein angetriebener Pin als auch als ein feststehender, d.h. nicht um die vertikale Achse X drehbarer Pin realisiert sein. Die Verstellung der Dreheinrichtung 5 in Querrichtung Q ist nach der Erfindung gezielt steuerbar, sowohl was die Geschwindigkeit und die Startposition und Endposition betrifft als auch was eine Beschleunigung oder Abbremsung betrifft, damit eine bewusst abgebremste Drehung der Kartonzuschnitte 1 im Sinne der Erfindung erfolgen kann. Insgesamt wird so durch die Erfindung eine Beschädigung oder ein ungewolltes Verrutschen der Kartonzuschnitte 1 sicher vermieden, da die Kartonzuschnitte 1 nicht mit voller Geschwindigkeit auf ein feststehendes Element, wie zum Beispiel einen mechanischen Stift oder eine Saugeinrichtung, auftreffen, sondern die Dreheinrichtung gezielt seitlich verstellt wird, so dass eine abgebremste Drehung der Kartonzuschnitte 1 erfolgen kann.

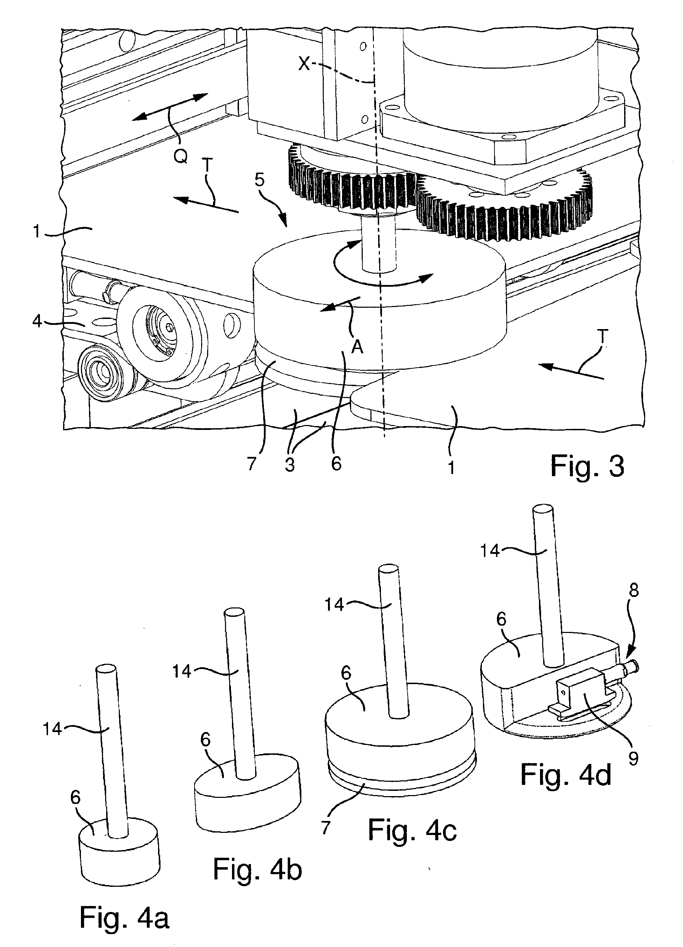

In der Fig. 3 ist in einer analogen Darstellung zu der Fig. 2 eine alternative Ausgestaltung der Dreheinrichtung 5 der Drehvorrichtung 10 gemäß der Erfindung in einer perspektivischen Detailansicht gezeigt. Hier ist als Mittel zum Einleiten der Drehung ein kreisrunder Pin 6 gezeigt, der ebenfalls über eine vertikale Antriebsachse X entlang in Drehung angetrieben werden kann. Der Pin 6 ist des Weiteren mit einem umfänglichen Aufnahmeschlitz 7 versehen, der in der Breite auf eine Dicke der zu drehenden Kartonzuschnitte 1 angepasst ist. Die von der rechten Seite in der Fig. 3 ankommenden Kartonzuschnitte 1 werden damit in gewisser Weise von drei Seiten von dem Aufnahmeschlitz 7 des Pins 6 umfasst und wie bei dem vorherigen Ausführungsbeispiel in einer abgebremsten Art und Weise in Drehung versetzt. Auch hier ist die Dreheinrichtung 5 in Querrichtung Q gezielt von einer Innenseite nach außen von der Transportstrecke 2 verstellbar, so dass schon aus diesem Grund eine abgebremste Drehung bewirkt wird. Zusätzlich kann dieser Effekt noch durch das Antreiben des Pins 6 in Drehung um die vertikale Achse X vergrößert werden. Dies ist jedoch nicht unbedingt erforderlich, und es kann auch ein feststehender, d.h. nicht um die Achse X drehbar angetriebener Pin 6 vorgesehen sein, ohne den Rahmen der Erfindung zu verlassen.

Die Fig. 4a bis 4d zeigen in perspektivischen Ansichten verschiedene alternative Formen eines Pins 6, der in einer Drehvorrichtung 10 gemäß der vorliegenden Erfindung eingesetzt werden kann: Der Pin 6 nach der Fig. 4a ist von einer kreisrunden Form und weist für die Montage an der Dreheinrichtung 5 einen nach oben vertikal wegragenden Befestigungsstiel 14 oder Achse auf. Der Pin 6 kann in einer Dreheinrichtung 5 angetrieben montiert sein oder als ein feststehender Pin 6 montiert werden. Die Fig. 4b zeigt eine demgegenüber alternative Form eines im Querschnitt in etwa ellipsenförmigen Pins 6, wie er schon oben im Zusammenhang mit der Fig. 2 beschrieben wurde. Durch die Ellipsenform können gezielt Beschleunigungen und Abbremsungen bei der Aufbringung des Drehimpulses auf die Kartonzuschnitte 1 erreicht werden. Die im Radius größeren Abschnitte der Ellipsenform erzeugen eine geringere Geschwindigkeit als die im Radius kleineren Bereiche des ellipsenförmigen Pins 6. Durch ein gezieltes Ansteuern der Lage und Drehstellung des Pins 6 kann dadurch die Drehgeschwindigkeit gezielt abgebremst und beschleunigt werden, damit die Kartonzuschnitte 1 sicher und ohne Beschädigung von beispielsweise einer Längsausrichtung in eine Querausrichtung verdreht werden können. In der Fig. 4c ist eine weitere Alternative eines Pins 6 entsprechend demjenigen aus der Fig. 3 gezeigt. Der Pin 6 ist auch hier kreisrund und weist an seinem Außenumfang einen Aufnahmeschlitz 7 auf. Durch den Aufnahmeschlitz 7 wird eine Vorderkante oder Seitenkante des Kartonzuschnitts 1 quasi von drei Seiten her umgriffen, so dass die Kraftübertragung verbessert ist und ein besserer Halteeffekt erreicht wird. Auch dieser Pin 6 nach der Fig. 4c kann sowohl feststehend als auch in Rotation angetrieben in der Dreheinrichtung 5 montiert sein. Bei der in der Fig. 4d gezeigten Alternative einer möglichen Ausgestaltung des Pins 6 der Dreheinrichtung 5 ist ein im Wesentlichen kreisrunder Pin vorhanden, der auf einer Seite mit einem geraden segmentförmigen Ausschnitt gebildet ist. Im Bereich des Ausschnitts ist eine Saugeinrichtung 9 montiert, über welche ein Unterdruck bzw. ein Vakuum erzeugt werden kann, das zum Halten der flachen Gegenstände 1 während des Bewirkens der Drehung dient. Die Kartonzuschnitte 1 werden quasi an dem segmentförmigen geraden Ausschnitt des Pins 6 durch den Saugeffekt der Saugeinrichtung 9 gehalten, so dass durch ein Antreiben des Pins 6 eine aktive Unterstützung der Drehung der Kartonzuschnitte 1 erreicht werden kann. Die Drehung ist damit noch sicherer als in dem Fall, in welchem der Pin nur passiv die Drehung hervorruft. Auch hier wird wie bei den vorherigen Ausführungsbeispielen der Pin 6 gezielt von einer Position von innen nach außen von der Transportstrecke in einer Querrichtung im Verhältnis zur Transportrichtung T während der Drehung verstellt, so dass die Kartonzuschnitte nach dem Verdrehen wieder in einer im Wesentlichen mittleren Ausrichtung, d.h. zentriert auf die Mittelachse M der Transportsrecke 2, zu liegen kommen.

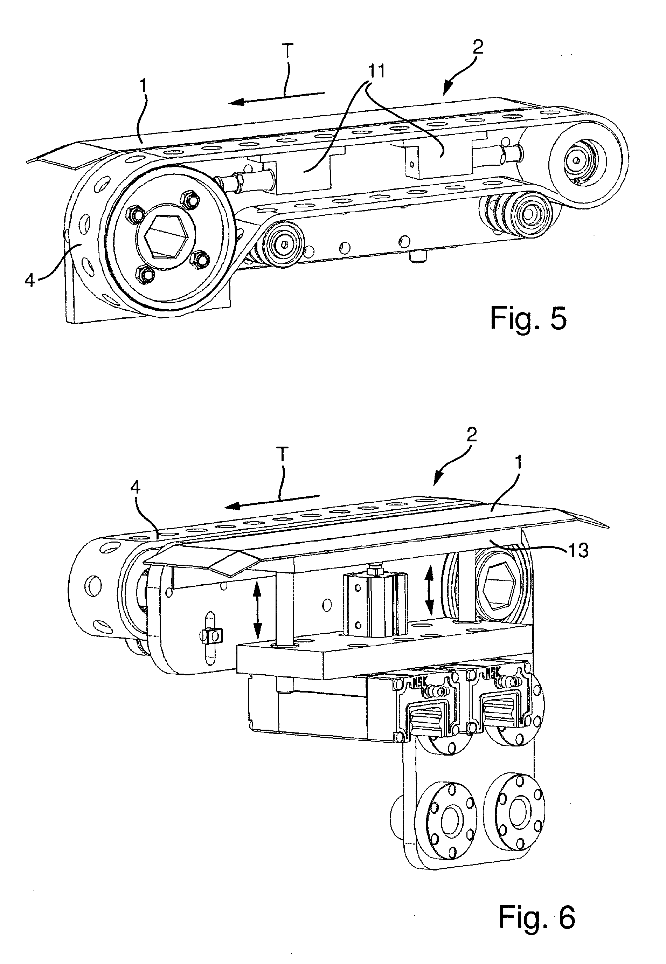

In der Fig. 5 und der Fig. 6 sind in perspektivischen Detailansichten jeweils zwei alternative Ausführungsformen von Mitteln zum Ausrichten der Kartonzuschnitte 1 innerhalb der Dreheinrichtung 5 bzw. vor oder nach der Drehung durch die Dreheinrichtung 5 gezeigt: Die Fig. 5 zeigt ein Band 4 mit Löchern, das einen Teil der Transportstrecke 2 der Drehvorrichtung 10 bildet. Das Band 4 wird über in der Fig. 5 nicht gezeigte motorische Mittel angetrieben. An der Unterseite der Transportstrecke 2 (Oberseite des Bandes 4 in der Fig. 5) sind jeweils zwei Vakuumeinrichtungen 11 zur Erzeugung eines Saugeffekts montiert. Durch die Löcher in dem Band 4 und die beiden Vakuumeinrichtungen 11 kann der auf der Transportstrecke 2 beförderte flache Gegenstand 1 gezielt beeinflusst werden, insbesondere für ein Ausrichten nach der Drehung, falls der Kartonzuschnitt 1 nicht mehr in der korrekten Ausrichtung positioniert ist. Zusätzlich oder alternativ kann die Transportstrecke 2 aus mehreren parallel angeordneten derartigen Bändern 4 bestehen, die gemäß der Erfindung separat angesteuert werden können. Durch ein unterschiedliches Ansteuern der Geschwindigkeiten der Transportbänder 4 kann ebenso eine Ausrichtung der gedrehten Kartonzuschnitte 1 erfolgen. Die Bänder 4 der Transportstrecke 2 können auch zur Unterstützung der Drehung der Kartonzuschnitte 1 eingesetzt werden, indem sie unterschiedlich schnell betrieben werden oder indem eines von zwei parallel nebeneinander angeordneten Bändern 4 kurzzeitig angehalten wird.

In der Fig. 6 ist eine weitere Alternative eines Ausrichtmittels gemäß der Drehvorrichtung 10 der vorliegenden Erfindung in einer Detailansicht dargestellt. Bei diesem Ausführungsbeispiel nach der Fig. 6 ist zusätzlich zu dem Transportband 4 ein Hebeblech 13 vorhanden. Das Hebeblech 13 ist an der Unterseite der Transportstrecke 2 und seitlich von dieser montiert. Das Hebeblech 13 ist mit Mitteln für eine vertikale Verstellung des Hebeblechs 13 versehen, wie es mit den Pfeilen in der Fig. 6 angedeutet ist. Wenn das Hebeblech 13 angehoben wird, wird der auf der Transportstrecke 2 beförderte Kartonzuschnitt ebenfalls angehoben und dadurch abgebremst, so dass eine Ausrichtung in eine exakte Position möglich wird.

Die beiden Ausrichtmittel gemäß Fig. 5 und Fig. 6 können selbstverständlich auch in Kombination in einer Drehvorrichtung 10 gemäß der vorliegenden Erfindung eingebaut sein. Sie können auch mit den oben dargestellten Varianten von Pins 6 alleine oder gemeinsam jeweils in einer erfindungsgemäßen Drehvorrichtung 10 eingesetzt sein.

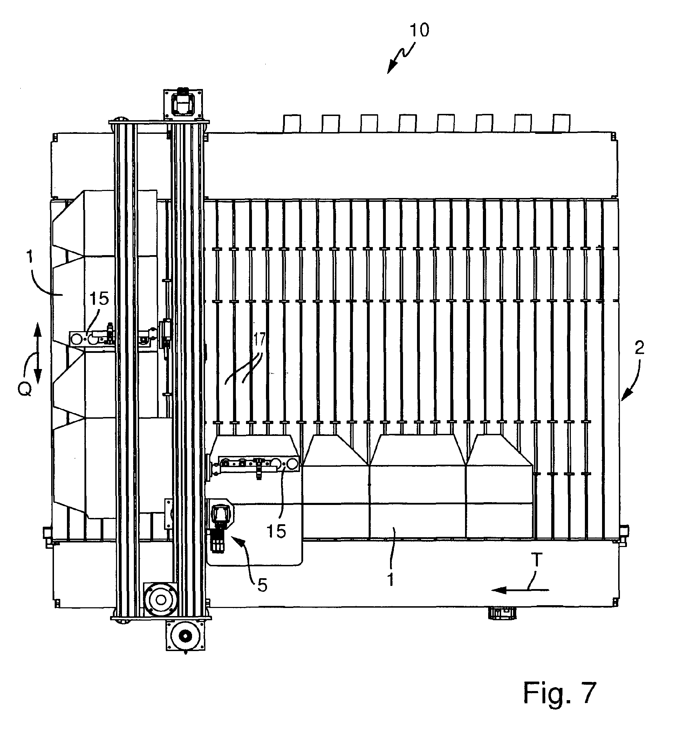

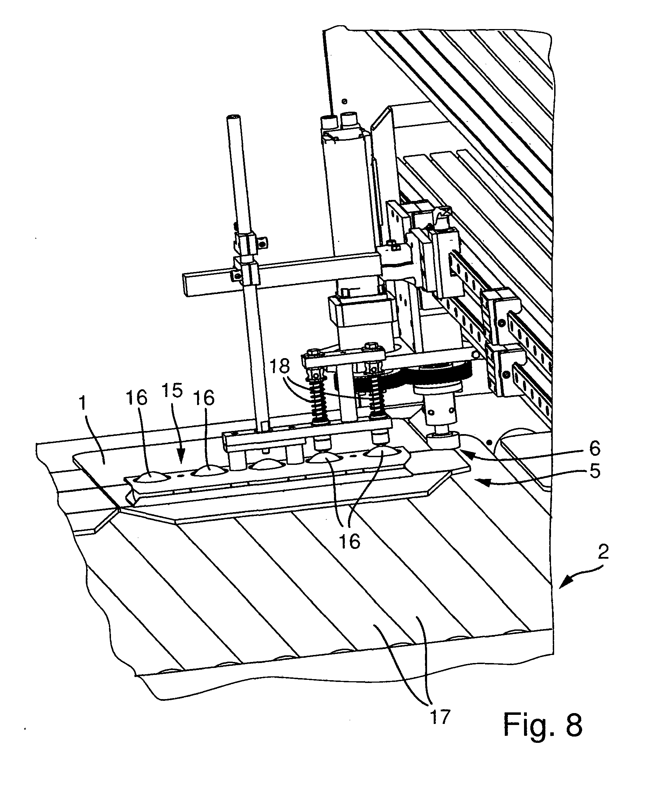

Ein zweites Ausführungsbeispiel einer erfindungsgemäßen Drehvorrichtung 10 ist in den Fig. 7 und 8 gezeigt und wird im Folgenden erläutert. Die Drehvorrichtung 10 ist bei diesem zweiten Ausführungsbeispiel ebenfalls mit einer Dreheinrichtung 5 versehen, welche an einer Art Brücke mit Laufkatze oberhalb einer Transportstrecke 2 derart vorgesehen ist, dass ein an der Dreheinrichtung 5 vorgesehener Pin in Querrichtung Q, d.h. senkrecht zu der Transportrichtung T, gezielt über eine Steuerung bewegt werden kann, um den Drehvorgang auszuführen. Die Kartonzuschnitte 1 kommen auch hier in Längsrichtung ausgerichtet an der Dreheinrichtung an und werden durch die Dreheinrichtung 5 über den Pin 6 an der vorderen Kante erfasst und seitlich bewegt. Der Pin 6 ist bei diesem Ausführungsbeispiel entgegen der Drehrichtung der Kartonzuschnitte angetrieben, wie es in der Fig. 8 mit dem Pfeil verdeutlicht ist. Durch den aktiv angetriebenen Pin 6 wird der Drehvorgang schneller und sicherer ausgeführt. Bei diesem Ausführungsbeispiel ist im Unterschied zu dem vorherigen Ausführungsbeispiel ein Niederhalter 15 im Bereich der Dreheinrichtung 5 vorgesehen, der von oben auf die zu drehenden Gegenstände 1 wirkt, um sie auf den Walzen 17 bzw. anderen Transportelementen der Transportstrecke 2 herunterzudrücken. Bei dem in den Fig. 7 und 8 gezeigten Ausführungsbeispiel besteht der Niederhalter 15 aus einer Reihe von frei drehbaren Kugeln 16, die in einer Art Kugelkäfig gemeinsam gehalten sind. Die fünf Kugeln 16 sind im Kugelkäfig frei drehbar, so dass sie sich einer Verdrehung der Kartonzuschnitte 1 nicht entgegenstellen bzw. einen möglichst geringen Widerstand bieten.

Wie es aus der Fig. 8 erkennbar ist, sind die beiden vordersten Kugeln 16 des Niederhalters 15 mit jeweiligen Spiralfedern 18 vorgespannt. Die Vorspannung der Spiralfedern 18 der beiden vorderen Kugeln 16 ist vorzugsweise unabhängig voneinander einstellbar, so dass bei druckempfindlichen Gegenständen 1 die Vorspannung beispielsweise progressiv zunehmend in Richtung der Transportrichtung T eingestellt werden kann, was eine Beschädigung von besonders empfindlichen Kartonzuschnitten beispielsweise vermeidet. Der Niederhalter 15 in Form einer Reihe von frei drehbaren Kugeln 16 ist bei diesem Ausführungsbeispiel in Längsrichtung der Transportrichtung T montiert. Gemäß einer alternativen Ausgestaltung (nicht gezeigt) kann die Kugelreihe des Niederhalters 15 auch leicht schräg im Verhältnis zur Transportrichtung T montiert sein, wodurch dem jeweiligen Bewegungsablauf beim Verdrehen der Kartonzuschnitte 1 gezielt Rechnung getragen werden kann. Unterhalb des Niederhalters 15 sind zumindest bereichsweise aktiv angetriebene Walzen 17 bzw. Rollen vorgesehen. Bei dem gezeigten Beispiel der Fig. 7 und 8 sind es zwei angetriebene Walzen 17, die jeweils mit einer Oberfläche versehen sind, welche einen Reibungsfaktor gegenüber den sonstigen Walzen der Transportstrecke 2 erhöht. Die angetriebenen Walzen 17 gewährleisten dadurch einen kontinuierlichen und in der gleichen Geschwindigkeit verlaufenden Weitertransport entlang der Transportstrecke 2 im Bereich der Dreheinrichtung 5, was die Steuerung und Ausführung des Drehvorgangs mit dem angetriebenen Pin 6 erleichtert. Als ein die Oberflächenreibung erhöhendes Material können aufgeklebte Materialschichten, wie zum Beispiel eine Gummi- oder Kunststoffbeschichtung, vorgesehen werden. Die reibungserhöhenden Oberflächen am Außenumfang der Walzen 17 können auch lediglich bereichsweise in bestimmten Abschnitten an den Walzen 17 realisiert sein.

Nach dem in der Fig. 8 gezeigten Ausführungsbeispiel ist der Niederhalter 15 in Form der fünf in Reihe angeordneten, frei drehbaren Kugeln 16 auch in der Höhe einstellbar. Mit dieser Maßnahme kann die Dreheinrichtung 5 gezielt auf unterschiedlich dicke Gegenstände 1 angepasst werden. Gemäß einem weiteren vorteilhaften Aspekt der Erfindung kann der Niederhalter 5 auch in einer leichten Schräge in Längsrichtung montiert sein, so dass sich die Abstände von den Kugeln 16 zu der Oberfläche der Transportstrecke 2 nach und nach verengen, wodurch eine Art Keilwirkung und verbessertes Niederhalten auch von leicht nach oben abstehenden Gegenständen 1 gewährleistet ist. Da die Kugeln 16 innerhalb ihres Käfigs des Niederhalters 15 frei drehbar sind, erlauben sie ein leichtes Verdrehen der Kartonzuschnitte 1 und gewährleisten dennoch ein sicheres Aufliegen auf der Transportstrecke 2 für den Drehvorgang. Bei dem in der Fig. 7 gezeigten Ausführungsbeispiel ist des Weiteren im Bereich nach der Dreheinrichtung 5 (in Transportrichtung T) in etwa in der Mitte der Transportstrecke 2 eine zweite Reihe von Kugeln 16 vorgesehen, die einen zweiten Niederhalter 15 ähnlich zu dem im Zusammenhang mit der Fig. 8 beschriebenen Niederhalter 15 darstellen. Mit dem Niederhalter 15 nach der Dreheinrichtung 5 werden die Kartonzuschnitte 1 gezielt abgebremst. Da beim Verdrehen der äußere Bereich der Kartonzuschnitte 1 eine stark erhöhte Geschwindigkeit hat, kann so die Lage in Querrichtung Q des Kartonzuschnitts 1 durch ein gezieltes Abbremsen sichergestellt werden. Die Form und die Position der Niederhalter 15 können in verschiedener Weise variiert werden. Es kann lediglich ein Niederhalter 15 vorgesehen sein, und der Niederhalter kann auch eine andere Form als die gezeigte Form mit fünf in Reihe geschalteten, drehbaren Kugeln 16 aufweisen.

## Patentansprüche

1. Vorrichtung (10) zum Drehen flacher Gegenstände (1), insbesondere von Kartonzuschnitten, mit einer Transportstrecke (2), über welche die Gegenstände (1) in Transportrichtung (T) flach liegend mittels Rollen (3) und/oder Bändern (4) transportiert werden, mit einer Dreheinrichtung (5), welche angepasst ist, die Gegenstände (1) während des fortlaufenden Transports auf der Transportstrecke (2) zu drehen, wobei die Dreheinrichtung (5) einen mechanischen Pin (6) aufweist, welcher in eine Querrichtung (Q) im Verhältnis zur Transportrichtung (T) von der Innenseite nach außen von der Transportstrecke (2) derart bewegbar ist, dass der Gegenstand (1) abgebremst gedreht wird, **dadurch gekennzeichnet, dass** der Pin (6) im Querschnitt eine im wesentlichen runde Form mit einem segmentförmigen geraden Ausschnitt (8) aufweist und dass der Pin (6) eine Saugeinrichtung (9) zum Halten der Gegenstände (1) während der abgebremsten Drehung aufweist.

2. Vorrichtung nach Anspruch 1, **dadurch gekennzeichnet, dass** eine Verstellbewegung des Pins (6) der Dreheinrichtung (5) in Querrichtung (Q) derart steuerbar ist, dass ein Zentrum des Gegenstandes (1) nach der Verdrehung in etwa in einer Mittelachse (M) der Transportstrecke (2) bleibt.

3. Vorrichtung nach Anspruch 1 oder 2, **dadurch gekennzeichnet, dass** der Pin (6)
- an einer Vorderseite des Gegenstandes (1) in Transportrichtung (T) gesehen angreift; und/oder
- im vorderen Bereich an einer Seitenkante des Gegenstandes (1) in Transportrichtung (T) gesehen angreift; und/oder
- der Dreheinrichtung (5) mit einem dämpfenden, elastischen Material ummantelt ist oder daraus besteh; und/oder
- um eine vertikale Achse (X) drehbar gelagert oder undrehbar montiert ist; und/oder
- zur Unterstützung der abgebremsten Drehung der Gegenstände (1) angetrieben ist; und/oder
- im Querschnitt eine ellipsenförmige Form aufweist; und/oder
- einen auf die Dicke der flachen Gegenstände (1) angepassten Aufnahmeschlitz (7) an seinem Außenumfang aufweist; und/oder
- im Längsschnitt eine nach unten verjüngte kegelstumpfartige Form aufweist; und/oder
- an seiner Umfangsfläche bürstenartige, insbesondere radial abragende Borsten aufweist.

4. Vorrichtung nach einem der vorhergehenden Ansprüche, **dadurch gekennzeichnet, dass** unter der Transportstrecke (2) mindestens eine Vakuumeinrichtung (11) zur Erzeugung eines Saugeffekts auf die Gegenstände (1) vorgesehen ist.

5. Vorrichtung nach einem der vorhergehenden Ansprüche, **dadurch gekennzeichnet, dass** ein Ausrichtmittel (12) für das Ausrichten der Gegenstände (1) nach der Drehung vorgesehen ist.

6. Vorrichtung nach Anspruch 5, **dadurch gekennzeichnet, dass** das Ausrichtmittel (12) aus parallelen und einzeln ansteuerbaren Bändern (4) der Transportstrecke (2) besteht.

7. Vorrichtung nach Anspruch 5 oder 6, **dadurch gekennzeichnet, dass** das Ausrichtmittel (12) ein seitlich der Transportstrecke (2) angeordnetes Hebeblech (13) umfasst.

8. Vorrichtung nach einem der vorhergehenden Ansprüche,
**dadurch gekennzeichnet, dass** die Transportstrecke (2) mindestens ein Transportband (4) aufweist, welches mit mindestens einer Vakuumeinrichtung (11) ausgestattet ist, mittels welcher zur Steuerung des Transports eine Saugwirkung auf die Gegenstände (1) erzeugbar ist.

9. Vorrichtung nach einem der vorhergehenden Ansprüche 1 bis 6 und 8, **dadurch gekennzeichnet, dass** der Pin (6) entgegen der Drehrichtung der Gegenstände (1) während des Drehvorgangs angetrieben ist und dass ein von oben auf die Gegenstände (1) wirkender, vorgespannter Niederhalter (15) mindestens im Bereich vor dem Pin (6) in Transportrichtung (T) vorgesehen ist.

10. Vorrichtung nach Anspruch 9, **dadurch gekennzeichnet, dass** der Niederhalter (15) eine Reihe von frei rotierbaren Kugeln (16) in einem Kugelkäfig umfasst.

11. Vorrichtung nach Anspruch 9 oder 10, **dadurch gekennzeichnet, dass** der Niederhalter (15) in seiner Vorspannung und/oder Höhe einstellbar ist.

12. Vorrichtung nach einem der Ansprüche 9 bis 11, **dadurch gekennzeichnet, dass** mindestens zwei Kugeln (16) als Niederhalter (15) vorgesehen sind, welche in ihrer Vorspannung unabhängig voneinander einstellbar sind.

13. Vorrichtung nach einem der Ansprüche 9 bis 12, **dadurch gekennzeichnet, dass** im Bereich des Niederhalters mindestens eine angetriebene Walze (17) der Transportstrecke (2) vorgesehen ist, welche mindestens bereichsweise eine reibungserhöhende Oberfläche aufweist.

14. Vorrichtung nach einem der vorhergehenden Ansprüche,
**dadurch gekennzeichnet, dass** im Bereich nach der Dreheinrichtung (5) ein von oben auf die Gegenstände (1) wirkender, vorgespannter Niederhalter (15) in Form einer Reihe von frei rotierbaren Kugeln (16) vorgesehen ist.

## Claims

1. A device (10) for rotating flat objects (1), in particular cardboard box blanks, having a conveyor system (2) by way of which the objects (1) are conveyed, lying flat, in the conveying direction (T) by means of rollers (3) and/or belts (4), having a rotator device (5), which is adapted to rotating the objects (1) during the ongoing conveyance on the conveyor system (2), the rotator device (5) having a mechanical pin (6), which is movable in a transverse direction (Q) relative to the conveying direction (T) from the inside outward by the conveyor system (2) in such a way that the object (1) is rotated in braked fashion, **characterized in that** the pin (6) in cross section has a substantially round shape with a segmental straight cutout (8); and that the pin (6) has a suction device (9) for holding the objects (1) during the braked rotation.

2. The device of claim 1, **characterized in that** an adjusting motion of the pin (6) of the rotator device (5) in the transverse direction (Q) is controllable in such a manner that a center of the object (1), after the rotation, remains approximately in a center axis (M) of the conveyor system (2).

3. The device of claim 1 or 2, **characterized in that** the pin (6)
- engages a front side of the object (1) as viewed in the conveying direction (T); and/or
- engages a side edge in the front region of the object (1) as viewed in the conveying direction (T); and/or
- of the rotator device (5) is sheathed with or comprises a damping elastic material; and/or
- is supported rotatably or mounted nonrotatably about a vertical axis (X); and/or
- is driven for supporting the braked rotation of the objects (1); and/or
- has an elliptical shape in cross section; and/or
- has a receiving slot (7), adapted to the thickness of the objects (1), on its outer circumference; and/or
- has a downward-tapered frustoconical shape in longitudinal section; and/or
- has brushlike, in particular radially protruding, bristles on its circumferential surface.

4. The device of one of the foregoing claims, **characterized in that** at least one vacuum device (11) for generating a suction effect on the objects (1) is provided under the conveyor system (2).

5. The device of one of the foregoing claims, **characterized in that** an alignment means (12) for aligning the objects (1) after the rotation is provided.

6. The device of claim 5, **characterized in that** the alignment means (12) comprises parallel and individually triggerable (4) of the conveyor system (2).

7. The device of claim 5 or 6, **characterized in that** the alignment means (12) includes a lifting plate (13) disposed laterally of the conveyor system (2).

8. The device of one of the foregoing claims, **characterized in that** the conveyor system (2) has at least one conveyor belt (4), which is equipped with at least one vacuum device (11) by means of which a suction effect on the objects (1) for controlling the conveying can be generated.

9. The device of one of the foregoing claims 1-6 and 8, **characterized in that** the pin (6) is driven counter to the direction of rotation of the objects (1) during the rotation operation; and that a prestressed holding-down device (15) acting on the objects (1) is provided at least in the region upstream of the pin (6) in the conveying direction (T).

10. The device of claim 9, **characterized in that** the holding-down device (15) includes a series of freely rotatable balls (16) in a ball cage.

11. The device of claim 9 or 10, **characterized in that** the holding-down device (15) is adjustable in its prestressing and/or its height.

12. The device of one of the foregoing claims 9-11, **characterized in that** at least two balls (16), which are adjustable in their prestressing independently of one another, are provided as the holding-down device (15).

13. The device of one of the foregoing claims 9-12, **characterized in that** in the vicinity of the holding-down device, at least one driven cylinder (17) of the conveyor system (2) is provided, which at least in some regions has a friction-increasing surface.

14. The device of one of the foregoing claims, **characterized in that** in the region downstream of the rotator device (5), a prestressed holding-down device (15) acting upon the objects (1) from above is provided in the form of a series of freely rotatable balls (16).

## Revendications

1. Dispositif (10) pour la rotation d'objets plats (1), plus particulièrement de découpes de carton, avec un trajet de transport (2), sur lequel les objets (1) sont transportés dans la direction de transport (T) à plat à l'aide de rouleaux (3) et/ou de bandes (4), avec un dispositif de rotation (5) conçu pour tourner les objets (1) pendant le transport sur le trajet de transport (2), le dispositif de rotation (5) comprenant une broche mécanique (6) qui est mobile dans une direction transversale (Q) par rapport à la direction de transport (T) de l'intérieur vers l'extérieur du trajet de transport (2), de façon à ce que l'objet (1) soit tourné avec freinage, **caractérisé en ce que** la section transversale de la broche (6) présente globalement une forme ronde avec une section droite (8) en forme de segment et **en ce que** la broche (6) comprend un dispositif d'aspiration (9) pour maintenir les objets (1) pendant la rotation avec freinage.

2. Dispositif selon la revendication 1, **caractérisé en ce qu'**un mouvement de réglage de la broche (6) du dispositif de rotation (5) est contrôlable dans la direction transversale (Q) de façon à ce qu'un centre de l'objet (1) reste, après la rotation, sur un axe central (M) du trajet de transport (2).

3. Dispositif selon la revendication 1 ou 2, **caractérisé en ce que** la broche (6)
- est en contact avec l'avant de l'objet (1), vu dans la direction de transport (T); et/ou
- est en contact, dans la zone frontale, avec un bord latéral de l'objet (1), vu dans la direction de transport (T); et/ou
- du dispositif de rotation (5) est entourée d'un matériau élastique amortisseur ou en est constituée; et/ou
- est logée de manière rotative autour d'un axe vertical (X) ou montée de manière non rotative; et/ou
- est entraînée pour assister la rotation freinée des objets (1); et/ou
- présente une section transversale de forme elliptique; et/ou
- comprend une fente de logement (7) adaptée à l'épaisseur des objets plats (1) sur sa périphérie extérieure; et/ou
- présente, en coupe longitudinale, une forme se rétrécissant vers le bas ou de cône tronqué; et/ou
- comprend, sur sa surface périphérique, des soies en forme de balais, plus particulièrement dépassant radialement.

4. Dispositif selon l'une des revendications précédentes, **caractérisé en ce que**, sous le trajet de transport (2), au moins un dispositif à vide (11) conçu pour la production d'un effet d'aspiration sur les objets (1).

5. Dispositif selon l'une des revendications précédentes, **caractérisé en ce qu'**un moyen d'alignement (12) est prévu pour l'alignement des objets (1) après la rotation.

6. Dispositif selon la revendication 5, **caractérisé en ce que** le moyen d'alignement (12) est constitué de bandes (4) parallèles et contrôlables individuellement du trajet de transport (2).

7. Dispositif selon la revendication 5 ou 6, **caractérisé en ce que** le moyen d'alignement (12) comprend une plaque de levage (13) disposée latéralement par rapport au trajet de transport (2).

8. Dispositif selon l'une des revendications précédentes, **caractérisé en ce que** le trajet de transport (2) comprend au moins une bande de transport (4) qui est équipée d'au moins un dispositif à vide (11) à l'aide duquel, pour le contrôle du transport, un effet d'aspiration peut être produit sur les objets (1).

9. Dispositif selon l'une des revendications 1 à 6 et 8, **caractérisé en ce que** la broche (6) est entraînée contre la direction de rotation des objets (1) pendant le processus de rotation et **en ce qu'**un serre-flan (15) précontraint agissant par en haut sur les objets (1) est prévu au moins dans la zone devant la broche (6) dans la direction de transport (T).

10. Dispositif selon la revendication 9, **caractérisé en ce que** le serre-flan (15) comprend une série de billes (16) tournant librement dans une cage à billes.

11. Dispositif selon la revendication 9 ou 10, **caractérisé en ce que** la précontrainte et/ou la hauteur du serre-flan (15) sont réglables.

12. Dispositif selon l'une des revendications 9 à 11, **caractérisé en ce qu'**au moins deux billes (16) sont prévues en tant que serre-flans (15), dont les précontraintes sont réglables indépendamment les unes des autres.

13. Dispositif selon l'une des revendications 9 à 12, **caractérisé en ce que**, au niveau du serre-flan, se trouve au moins un rouleau (17) entraîné du trajet de transport (2), qui présente au moins à certains endroits une surface augmentant la friction.

14. Dispositif selon l'une des revendications précédentes, **caractérisé en ce que** dans la zone après le dispositif de rotation (5) se trouve un serre-flan (15) précontraint agissant par en haut sur les objets (1) sous la forme d'une série de billes (16) tournant librement.
